# EUROPEAN PATENT SPECIFICATION

(11) **EP 3 905 535 B1**
(45) Date of publication and mention of the grant of the patent: **27.04.2022**
(21) Application number: 20171723.8
(22) Date of filing: 28.04.2020
(51) Int. Cl.: H04B 1/7097, G01S 19/24

(54) **NOISE DISTRIBUTION SHAPING OF A DATA MODULATED CODE DIVISION MULTIPLE ACCESS SIGNAL**
RAUSCHVERTEILUNGSFORMUNG EINES DATENMODULIERTEN CODEMULTIPLEX-VIELFACHZUGRIFFSIGNALS
FAÇONNAGE DE DISTRIBUTION DE BRUIT D'UN SIGNAL À ACCÈS MULTIPLE PAR RÉPARTITION EN CODE À MODULATION DE DONNÉES

(43) Date of publication of application: 03.11.2021
(73) Proprietor: Airbus Defence and Space GmbH, 82024 Taufkirchen (DE)
(72) Inventor: SOUALLE, Francis, 82024 Taufkirchen (DE); CATTENOZ, Mathieu, 92240 Malakoff (FR)
(74) Representative: Frenkel, Matthias Alexander

(56) References cited:
- EP-A1- 3 182 164
- EP-A1- 3 182 606
- US-A1- 2005 047 489

## Description

The invention relates to noise distribution shaping of a data modulated Code Division Multiple Access signal.

Interferences on radio signals such as Code Division Multiple Access signals emitted by satellites of a global navigation satellite system usually occur in pulsed noise environments such as in the neighbourhood of vehicle ignition systems, power lines, heavy current switches or microwave ovens. The interferences occurring in these environments are usually emitted in bursts and, thus, cannot be modelled as Gaussian.

In order to reduce effects of pulsed interferences on the reception of a radio signal, a blanker can be applied in a signal receiver. The blanker sets received signal samples to zero when they contain high power pulsed interferences. The typical blanker uses two fixed thresholds BTH+ and BTH-, which are symmetrical to zero. If a received signal sample contains interferences and exceeds a threshold, the sample is set to zero by the blanker. Typical receivers for Code Division Multiple Access signals are equipped with such a blanker.

In the absence of interference, which may be for some signal receivers a frequent situation, the blanker still operates and sets portions of a received signal to zero, which are affected by large thermal noise samples. However, this may lead to an undesired reduction of the signal-to-noise and interference ratio.

When Code Division Multiple Access signals are modulated by data, the polarity of a single chip does not only depend on the polarity of the chip of the spreading sequence, but also on the modulated data, particularly the symbol comprised in the data. Consequently, when applying blanking to data modulated Code Division Multiple Access signals, an offsetting of the upper and lower blanking thresholds in the wrong direction according to the symbol dependency leads to degradation of tracking performances with respect to the case when the thresholds are offset in the right direction.

Prior art can be found in EP 3 182 164 A1 which generally relates to noise distribution shaping for signals, particularly CDMA signals, with mitigation of artefact signals and in EP 3 182 606 A1 which generally relates to blanking using signal-based thresholding schemes.

It is an object of the present invention to provide a modified blanking approach for Code Division Multiple Access signals, which may improve tracking and demodulation performances.

The invention is set out in the independent claims. Preferred embodiments of the invention are set out in the dependent claims.

According to a first aspect, a method for noise distribution shaping of a data modulated Code Division Multiple Access, CDMA, signal is provided. The method comprises separating the data modulated CDMA signal onto a first and second channel. The first channel comprises an adaptive blanker. The method comprises correlating the data modulated CDMA signal on the second channel with a replica having the same chip sequence of the CDMA signal. The replica is shifted by a predefined phase. The method comprises extracting from the correlation result a sign of a symbol included in the data. The method comprises modifying the noise distribution of the data modulated CDMA signal on the first channel by applying blanking of the data modulated CDMA signal under control of the adaptive blanker. The adaptive blanker has upper and lower blanking thresholds. The upper and lower blanking thresholds are adjusted based on the extracted sign of the symbol.

An advantage of the solution is that by extracting the right sign of the modulated symbol, the tracking performances are improved for data modulated signals. Another advantage of the solution is that a code delay estimate, introduced by the replica and the predefined phase, leads to better demodulation performances.

The upper blanking threshold can be offset by a positive value and the lower blanking threshold can be offset by a negative value. The positive and negative values can be set by a scaled standard deviation of thermal noise and circumferential interference.

The influence of thermal noise and circumferential interference provides the advantage of adapting to the surrounding environment.

The upper and lower blanking thresholds can be offset by a square root of an estimated power (Pₑₛₜ) of the CDMA signal multiplied by a chip value polarity of the CDMA signal or the replica and a predefined scaling factor, α*.*

This has the advantage of adapting the blanking thresholds to an advanced interval leading to a more robust blanking performance.
α can be positive, negative, constant, time dependent, or changing its sign over time as function of the CDMA signal.

The replica can be shifted to an early, a prompt and a late replica.

The data modulated CDMA signal on the first channel can further be separated onto two separate channels. Each of the two separate channels can comprise an adaptive blanker. A threshold of the adaptive blanker of one of the two separate channels can be adjusted by an offset in an opposite direction to a threshold of the adaptive blanker of the other one of the two separate channels. The method can further comprise the step of modifying the noise distribution of the data modulated CDMA signal on the two separate channels by applying blanking of the data modulated CDMA signal under control of the adaptive blankers on the two separate channels. The method can further comprise the step of correlating the blanked data modulated CDMA signals on the two separate channels with a prompt replica. The prompt replica can represent the best estimate of the data modulated CDMA signal.

This has the advantage of better recovering the symbol comprised in the data.

The second channel can further comprise an adaptive blanker. The method can further comprise adjusting the adaptive blankers based on a third channel. The third channel can comprise a second source. The second source can transmit the sign of the symbol included in the data. The method can further comprise modifying the noise distribution of the data modulated CDMA signal on the first and second channel by applying blanking of the data modulated CDMA signal under control of the adaptive blankers.

This has the advantage of providing a non-corrupted source to the receiver leading to a robust tracking performance.

According to a second aspect of the present invention a computer program implements a method according to the first aspect.

According to a third aspect of the present invention, a storage device stores a computer program according to the second aspect.

According to a fourth aspect of the present invention, a device for noise distribution shaping of a data modulated Code Division Multiple Access, CDMA, signal is provided. The device comprises a separating unit. The separating unit is adapted to separate the data modulated CDMA signal onto a first and second channel. The first channel comprises an adaptive blanker. The device comprises a correlating unit. The correlating unit is adapted to correlate the data modulated CDMA signal on the second channel with a replica having the same chip sequence of the CDMA signal. The replica is shifted by a predefined phase. The device comprises an extracting unit. The extracting unit is adapted to extract from the correlation result a sign of a symbol included in the data. The device comprises an adaptive blanker. The adaptive blanker is adapted to modify the noise distribution of the data modulated CDMA signal on the first channel by applying blanking of the data modulated CDMA signal. The adaptive blanker has upper and lower blanking thresholds and the upper and lower blanking thresholds are adapted based on the extracted sign of the symbol.

Even if the foregoing described aspects with respect to the method were only described for the method, these aspects can further relate to the foregoing described device and vice versa.

The present invention will be further described in more detail hereinafter with reference to the figures. As follows:
- Figure 1: schematically illustrates a GNSS receiver;
- Figure 2: schematically illustrates a digital receiver channel;
- Figure 3: schematically illustrates a device for demodulating a symbol comprised in the data modulated CDMA signal and the use of the symbol information;
- Figure 4: schematically illustrates a device for recovering a modulated symbol from a third communication channel;
- Figure 5: schematically illustrates a device using different hypotheses for a modulated symbol for recovering the corresponding symbol; and
- Figure 6: schematically illustrates demodulation performances according to a symbol error rate comparison; and
- Figure 7: schematically illustrates a method according to an embodiment of the present invention.

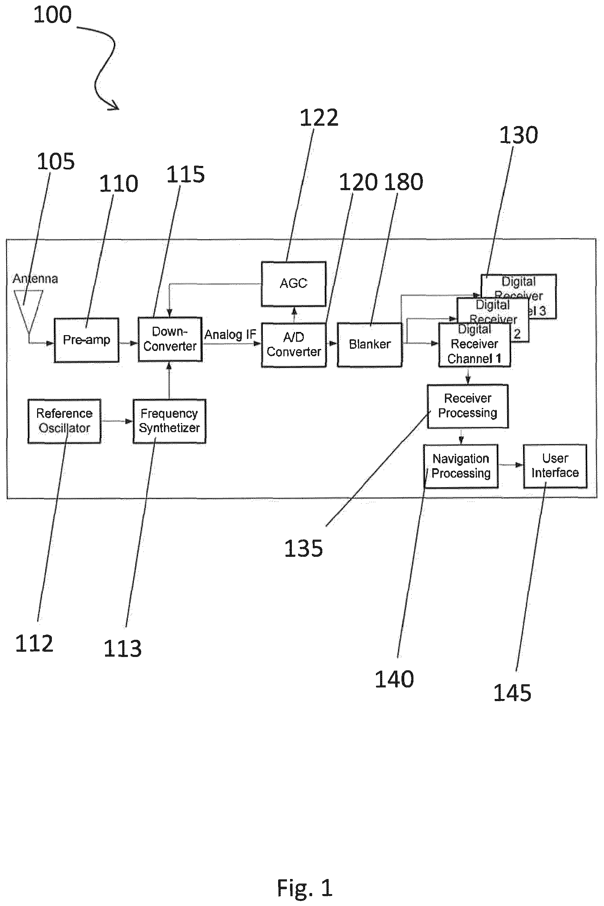

Figure 1 schematically shows a GNSS receiver 100 with main functional blocks. A Code Division Multiple Access (CDMA) signal is first received via an antenna 105. The CDMA signal is then fed to a pre-amplifier stage 110. The pre-amplifier stage 110 aims at increasing the received signal to a level compatible with the following components of the GNSS receiver 100, the receiver front-end respectively. The pre-amplifier stage 110 can comprise a single or several amplifiers mounted in cascade. The first amplifier arranged downstream to the antenna 105 is usually a low noise amplifier (LNA) and is characterized by a small noise figure (NF). The received signal, which is usually in a high frequency domain, for example 1575.42 MHz for GPS C/A signals, is firstly down converted to an intermediate frequency (IF). This downconversion is usually performed before an analogue to digital converter (ADC) 120 via a down converter 115. This step can also be performed in the digital domain, if the sampling frequency of the A/D converter 120 is large enough following the Nyquist condition. In order to perform a down conversion from an RF signal to an IF signal, the RF signal must be multiplied with a cosine at a frequency corresponding to RF-IF, for example 1575.42 MHz - IF. A reference oscillator 112 provides a frequency synthesizer 113 with a reference frequency, which frequency synthesizer 113 is then outputting a desired (RF-IF) signal for the down converter 115 for down conversion from RF to IF. After the signal has been down converted, it is in an IF domain, which is then sampled via the A/D converter 120. Further, an automatic gain control (AGC) 122 is used to adapt the power of the received signal in mere real time. The AGC 122 monitors the power level of the samples and provides information for multiplying the received signal in RF domain with a variable gain. The part before the A/D converter 120 is usually called the analogue front-end, wherein the part downstream to the analogue front-end is usually called digital front-end. In the digital front-end, the output of the ADC 120 is then fed to a blanker 180. The blanker aims at setting samples to zero which contain large interference signals comprised in the received signal. In figure 1 the blanker is implemented in the digital front-end, however the blanker can also be implemented into an analogue front-end. After the blanker 180, the remaining digital samples are then injected to N digital receiver channels, where N represents the number of line-of-sight satellite signals. As for the case of satellite signals, they need to be tracked in order to make a position estimation. This requires position and timing performance, which is usually more accurate using more digital receiver channels 130. Each digital receiver channel 130 aims at processing the IF signals, by first wiping-off the remaining carrier frequency of the received signal. This is necessary for correlator channels provided downstream to the digital receiver channels 130. The correlated channels are necessary for signal acquisition but also for code and carrier estimations and navigation data demodulation.

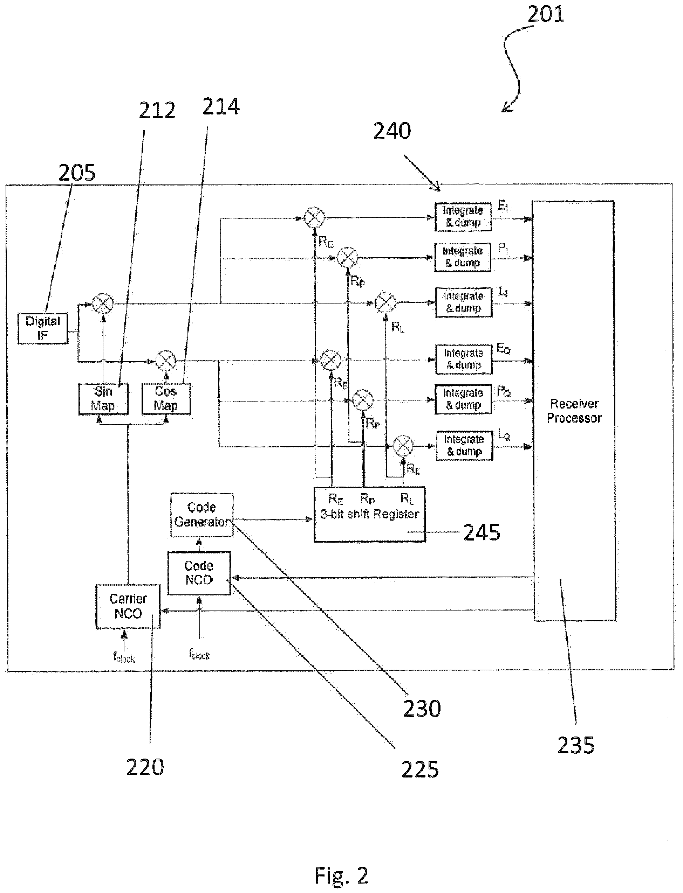

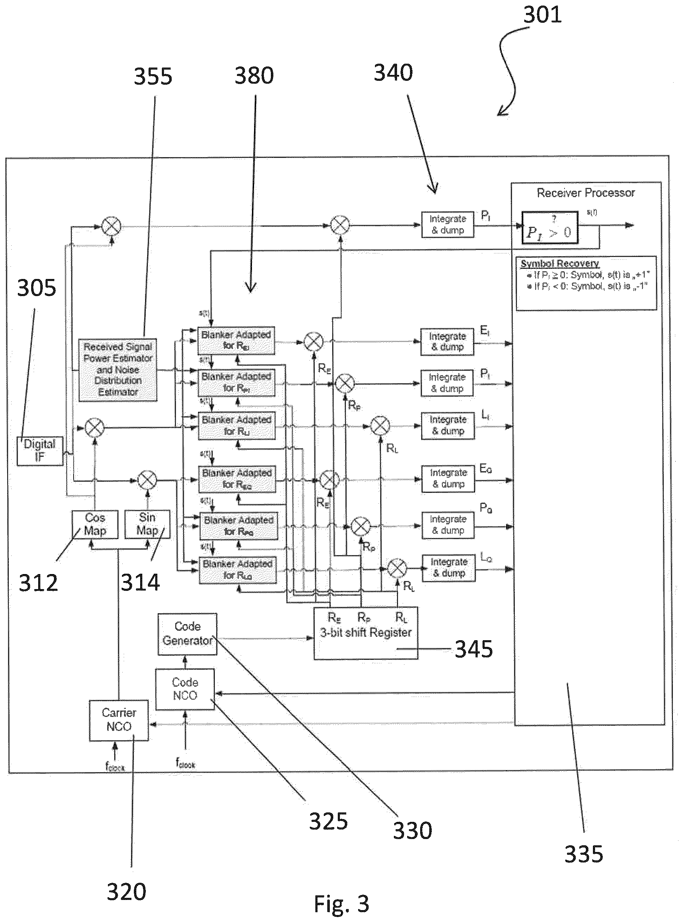

Figure 2 schematically illustrates a digital receiver channel 201 with its underlying functional blocks. In a first step a digital signal in the IF domain, corresponding to digital IF 205, is multiplied on one side by a sine function, the SIN Map 212, and on the other side by a cosine function, the COS Map 214. Both sine and cosine functions have arguments of the remaining carrier plus an estimation of a carrier phase. The estimation of the carrier phase is provided by a carrier NCO 220 fed by a control signal originating from a phased lock loop implemented in the receiver processor 235. The signal output of the cosine function is usually called the inphase component. The signal output of the sine function is usually called the quadrature component. Each of the inphase and quadrature components is multiplied by different shifted versions of a prompt replica. The prompt replica represents the best estimate of the received CDMA signal. For each inphase and quadrature component, three main replica are generated, the early, the prompt and the late replica. It is possible to have receiver implementations considering five or even more shifted replicas. The output of the multiplication is then integrated and dumped via the integrate and dump 240 functional block. This is necessary to provide the correlator outputs necessary for the code delay lock loop and phase lock loop, which is processed in the receiver processor 235. The figure schematically illustrates 6 correlator channels being fed to the receiver processor 235. Those 6 correlator channels are the early-in phase Eᵢ, the prompt-in phase Pᵢ, the late-in phase Lₗ, the early-quadrature phase E_{Q}, the prompt-quadrature phase P_{Q} and the late-quadrature phase L_{Q}. To build the required replicas, a code generator aims at generating code sequences which are later shifted according to the early, prompt and late offsets, built in the 3-bit shift register 245. The code generator 230 is disciplined (steered) by a code NCO 225. The code NCO 225 receives control signals from the delay lock loop, DLL, running in the receiver processor. This happens in a same manner as the carrier NCO 220 receives control signals from the phase lock loop, PLL, running in the receiver processor 235. For symbol recovery, the output of the punctual channel of the inphase channel (Pᵢ) is processed. Typically, the demodulation of the symbols is performed on the prompt correlated channel being compared to 0. The sign of the correlated channel Pᵢ is the estimate sign of the modulated symbol. This estimated sign can then be used to extract the sign by an extension introduced in figure 3.

Figure 3 schematically illustrates a device for demodulating a modulated symbol with an extension by two functional blocks, the received signal power estimator and noise distribution estimator 355 and a blanker adapted for each of the 6 channels according to figure 2. The signal in the IF domain is demodulated by a cosine and sine function from a carrier NCO 320. The signals are then blanked on each of the 6 channels by a blanker 380. The 6 different blankers are provided by a 3-bit shift register 345 and a signal power estimator and noise distribution estimator 355. The 6 blankers are adapted for each channel according to an early, prompt and late shifted replica and the corresponding inphase and quadrature component. The upper and lower blanking thresholds are adapted according to an estimated signal power and noise distribution estimation. Further, the blanker can be adapted by offsetting the upper and lower blanking thresholds according to the chip sequence of the modulated CDMA signal or the early, prompt or the late replica. After integration and dumping 340 the prompt inphase of the modulated CDMA signal, the receiver processor 335 can derive a symbol corresponding to be +1 or -1. This information about the symbol is used to adjust the upper and lower blanking thresholds of the 6 different blankers. With the symbol information for the blankers, each of the 6 channels lead to improved tracking performances and synchronization of the different replicas.

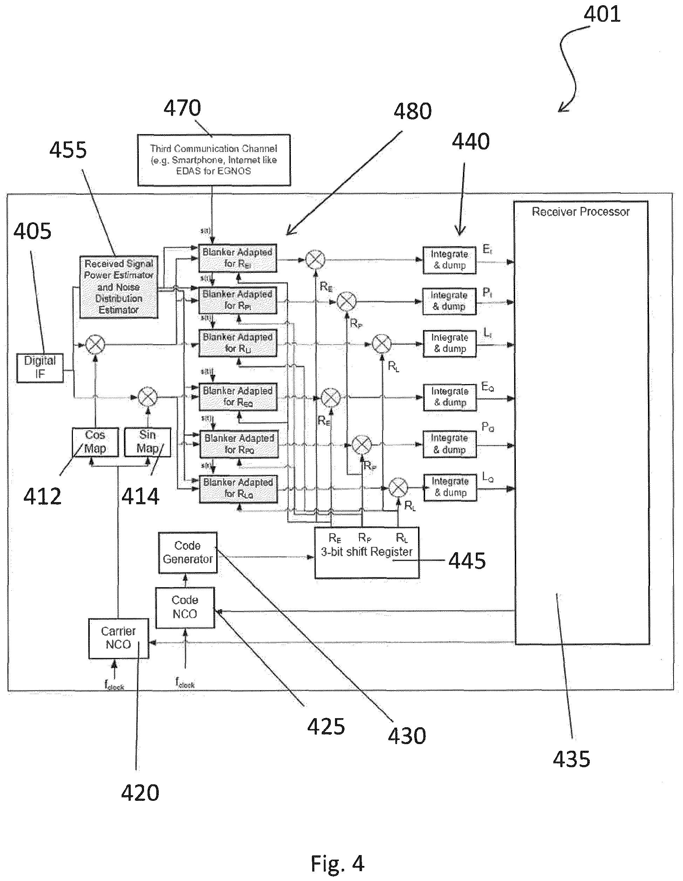

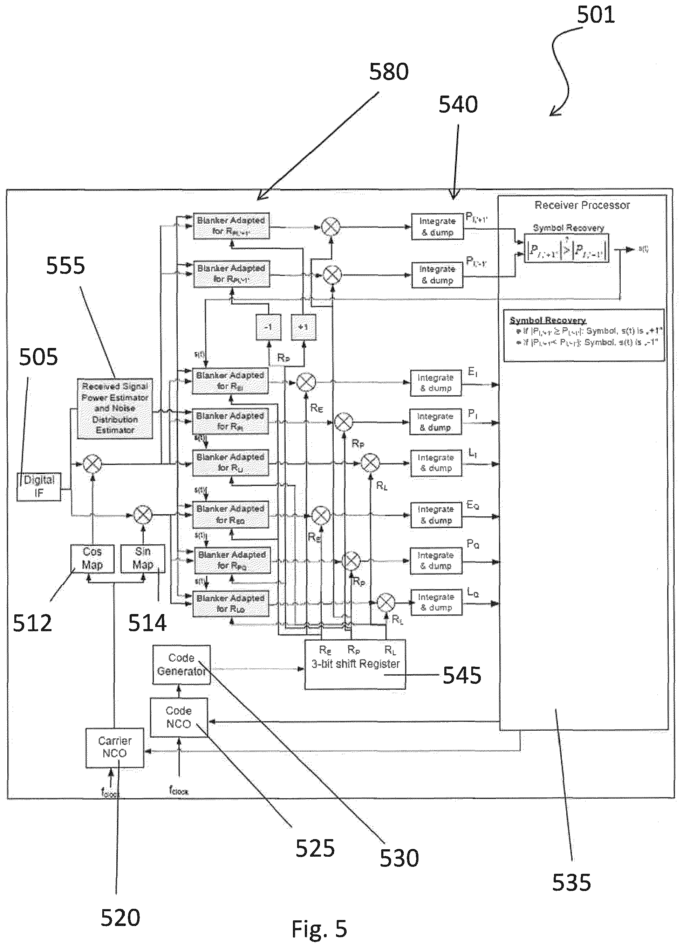

Figure 4 introduces a third communication channel, such like a mobile communication channel or intranet, for example using EDAS, EGNOS data access service, for the EGNOS correction data. The third communication channel 470 provides the 6 blankers 480, which correspond to the blankers of figure 3, with the data, including the symbol, modulated on the CDMA signal. Therefore, the channel comprising the prompt inphase of the data modulated CDMA signal can be replaced by a third communication channel delivering information of the symbol comprised in the data modulated on the CDMA signal. A further method of extracting a symbol for symbol recovery and adapting a blanker is provided in figure 5.

Figure 5 schematically illustrates another possible way of extracting and recovering a symbol comprised in the data modulated on the CDMA signal. This is based on a comparison of the absolute value of the correlation output of each adaptive blanker channel, the prompt correlator. The inphase component after demodulating the CDMA signal by the COS Map 512 is separated into two channels comprising a blanker 580. One of the blankers 580 is provided with a positive symbol estimate, wherein the other blanker 580 is provided with a negative symbol estimate. The upper and lower blanking thresholds are offset according to the prompt replica generated by the 3-bit shift register 545. The blanker can be further offset by a received signal power estimate and noise distribution estimate being illustrated by the functional block 555. After integrating and dumping 540 the two blanked prompt inphase components of the data modulated CDMA signal, the symbol is recovered in the receiver processor 535. The receiver processor 535 then provides information about the symbol. This information is then fed to the 6 blankers according to figures 2 to 4. The blankers 580 then blank the data modulated CDMA signals according to blanking thresholds set by the corresponding early, prompt and late replica respectively. After blanking, the blanked signals are correlated with the corresponding early, prompt and late replica respectively for the inphase and quadrature component. After processing the early, the prompt, and the late inphase component as well as the early, the prompt and the late quadrature component fed to the receiver processor 535, the synchronization of the replica profits from the improved tracking performances according to the adaptive blanker. The provision of a method according to figure 5 with the two adaptive blankers adapted by and provided with a positive and negative symbol provides an advantage of providing an alternative method to recover a symbol value included in the data using an adaptive blanking threshold technique.

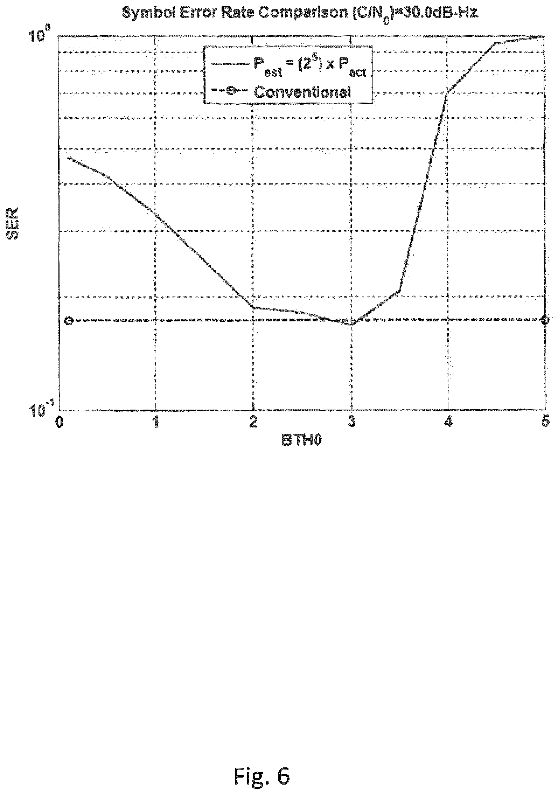

Figure 6 schematically illustrates a symbol error rate comparison. On the axis of abscissae, a blanking threshold BTHO and on the axis of ordinate a symbol error rate is shown. For the important parameters, the C/NO at which acquisition is performed is 30 dB-Hz. The BTHO is expressed as a scaling factor multiplied with an estimated noise power. The estimated power is 2⁵ times the actual power. The result shows that for BTHO between 2 and 3 times σₙₒᵢₛₑ, the demodulation performances can be little better than the one of a conventional demodulator (dashed dark line in figure 6).

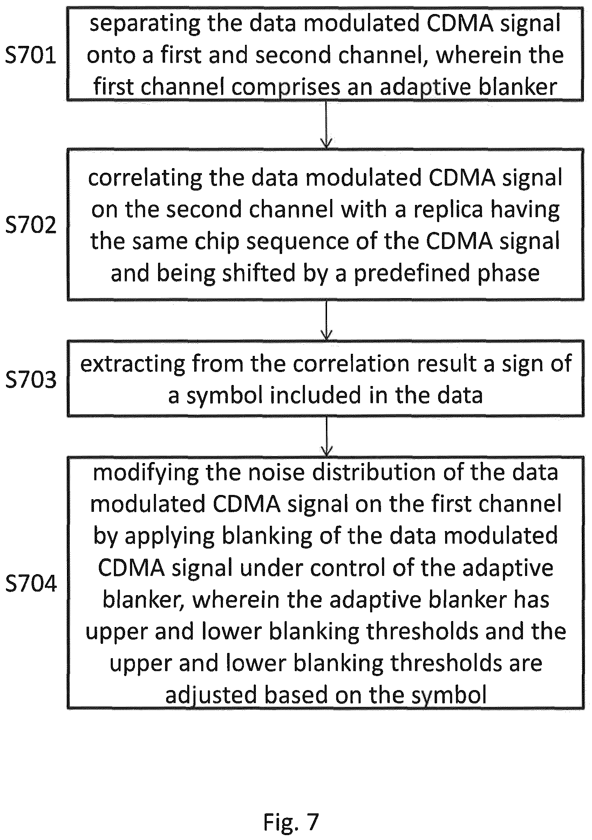

Figure 7 schematically illustrates a method according to an embodiment of the present invention. The method for noise distribution shaping of a data modulated Code Division Multiple Access, CDMA, signal. The method comprises separating S701 the data modulated CDMA signal onto a first and second channel, wherein the first channel comprises an adaptive blanker. The method comprises correlating S702 the data modulated CDMA signal on the second channel with a replica having the same chip sequence of the CDMA signal. The replica is shifted by a predefined phase. The method comprises extracting S703 from the correlation result a sign of a symbol included in the data. The method comprises modifying S704 the noise distribution of the data modulated CDMA signal on the first channel by applying blanking of the data modulated CDMA signal under control of the adaptive blanker. The adaptive blanker has upper and lower blanking thresholds and the upper and lower blanking thresholds are adjusted based on the symbol. The present invention further provides a device for noise distribution shaping of a data modulated Code Division Multiple Access, CDMA, signal.

## Claims

1. A method for noise distribution shaping of a data modulated Code Division Multiple Access, CDMA, signal, comprising:
separating (S701) the data modulated CDMA signal onto a first and second channel, wherein the first channel comprises an adaptive blanker;
correlating (S702) the data modulated CDMA signal on the second channel with a replica having the same chip sequence of the CDMA signal and being shifted by a predefined phase;
extracting (S703) from the correlation result a sign of a symbol included in the data; and
modifying (S704) the noise distribution of the data modulated CDMA signal on the first channel by applying blanking of the data modulated CDMA signal under control of the adaptive blanker, wherein the adaptive blanker has upper and lower blanking thresholds and the upper and lower blanking thresholds are adjusted based on the extracted sign of the symbol.

2. The method according to claim 1, wherein the upper blanking threshold is offset by a positive value and the lower blanking threshold is offset by a negative value, wherein the positive and negative values are set by a scaled standard deviation of thermal noise and circumferential interference.

3. The method according to claims 1 or 2, wherein the upper and lower blanking thresholds are offset by a square root of an estimated power, Pₑₛₜ, of the CDMA signal multiplied by a chip value polarity of the CDMA signal or the replica and a predefined scaling factor, a.

4. The method according to claim 3, wherein *α* is positive, negative, constant, time dependent, or changing its sign over time as function of the CDMA signal.

5. The method according to any one of the foregoing claims, wherein the replica is shifted to an early, a prompt and a late replica.

6. A method according to any one of the foregoing claims, wherein the data modulated CDMA signal on the first channel is further separated onto two separate channels, wherein each of the two separate channels comprise an adaptive blanker, and wherein a threshold of the adaptive blanker of one of the two separate channels is adjusted by an offset in an opposite direction to a threshold of the adaptive blanker of the other one of the two separate channels, wherein the method further comprises the steps of:
modifying the noise distribution of the data modulated CDMA signal on the two separate channels by applying blanking of the data modulated CDMA signal under control of the adaptive blankers on the two separate channels; and
correlating the blanked data modulated CDMA signals on the two separate channels with a prompt replica.

7. A method according to any one of the foregoing claims, wherein the second channel further comprises an adaptive blanker, wherein the method further comprises:
adjusting the adaptive blankers based on a third channel comprising a second source, wherein the second source transmits the sign of the symbol included in the data; and
modifying the noise distribution of the data modulated CDMA signal on the first and second channel by applying blanking of the data modulated CDMA signal under control of the adaptive blankers.

8. A computer program comprising instructions which, when the program is executed by a computer, cause the computer to carry out the steps of the method of any one of the preceding claims.

9. A computer-readable storage medium having stored thereon the computer program according to claim 8.

10. A device for noise distribution shaping of a data modulated Code Division Multiple Access, CDMA, signal, comprising:
a separating unit adapted to separate the data modulated CDMA signal onto a first and second channel, wherein the first channel comprises an adaptive blanker;
a correlating unit (235) adapted to correlate the data modulated CDMA signal on the second channel with a replica having the same chip sequence of the CDMA signal and being shifted by a predefined phase;
an extracting unit (335) adapted to extract from the correlation result a sign of a symbol included in the data; and
an adaptive blanker adapted to modify the noise distribution of the data modulated CDMA signal on the first channel by applying blanking of the data modulated CDMA signal, wherein the adaptive blanker has upper and lower blanking thresholds and the upper and lower blanking thresholds are adapted based on the extracted sign of the symbol.

## Patentansprüche

1. Verfahren zur Rauschverteilungsformung eines datenmodulierten Code Division Multiple Access, CDMA, -Signals, umfassend:
Trennen (S701) des datenmodulierten CDMA-Signals auf einen ersten und einen zweiten Kanal, wobei der erste Kanal einen adaptiven Blanker umfasst;
Korrelieren (S702) des datenmodulierten CDMA-Signals auf dem zweiten Kanal mit einer Nachbildung, die die gleiche Chipsequenz des CDMA-Signals aufweist und um eine vordefinierte Phase verschoben ist;
Extrahieren (S703) eines Vorzeichens für ein in den Daten enthaltenes Symbol aus dem Korrelationsergebnis; und
Modifizieren (S704) der Rauschverteilung des datenmodulierten CDMA-Signals auf dem ersten Kanal durch Anwenden einer Austastung des datenmodulierten CDMA-Signals unter Steuerung des adaptiven Blankers, wobei der adaptive Blanker obere und untere Blanking-Schwellen aufweist und die oberen und unteren Blanking-Schwellen auf der Grundlage des extrahierten Vorzeichens des Symbols eingestellt werden.

2. Verfahren nach Anspruch 1, wobei die obere Blanking-Schwelle um einen positiven Wert und die untere Blanking-Schwelle um einen negativen Wert verschoben wird, wobei die positiven und negativen Werte durch eine skalierte Standardabweichung des thermischen Rauschens und der Umfangsinterferenz festgelegt werden.

3. Verfahren nach Anspruch 1 oder 2, wobei die obere und die untere Blanking-Schwelle um eine Quadratwurzel einer geschätzten Leistung, Pₑₛₜ, des CDMA-Signals, multipliziert mit einer Chipwert-Polarität des CDMA-Signals oder der Nachbildung und einem vordefinierten Skalierungsfaktor, α, versetzt sind.

4. Verfahren nach Anspruch 3, wobei α positiv, negativ, konstant, zeitabhängig ist oder sein Vorzeichen über die Zeit als Funktion des CDMA-Signals ändert.

5. Verfahren nach einem der vorangehenden Ansprüche, wobei die Nachbildung in eine frühe, eine prompte und eine späte Nachbildung verschoben wird.

6. Verfahren nach einem der vorstehenden Ansprüche, wobei das datenmodulierte CDMA-Signal auf dem ersten Kanal ferner auf zwei getrennte Kanäle aufgeteilt wird, wobei jeder der beiden getrennten Kanäle einen adaptiven Blanker umfasst, und wobei ein Schwellenwert des adaptiven Blankers eines der beiden getrennten Kanäle durch einen Versatz in einer entgegengesetzten Richtung auf einen Schwellenwert des adaptiven Blankers des anderen der beiden getrennten Kanäle eingestellt wird, wobei das Verfahren ferner die folgenden Schritte umfasst::
Modifizieren der Rauschverteilung des datenmodulierten CDMA-Signals auf den beiden getrennten Kanälen durch Anwenden von Ausblendung des datenmodulierten CDMA-Signals unter Steuerung der adaptiven Blankers auf den beiden getrennten Kanälen; und
Korrelieren der ausgeblendeten datenmodulierten CDMA-Signale auf den beiden getrennten Kanälen mit einer prompten Nachbildung.

7. Verfahren nach einem der vorangehenden Ansprüche, wobei der zweite Kanal ferner einen adaptiven Blanker umfasst, wobei das Verfahren ferner umfasst:
Einstellen des adaptiven Blankers auf der Grundlage eines dritten Kanals, der eine zweite Quelle umfasst, wobei die zweite Quelle das Vorzeichen des in den Daten enthaltenen Symbols sendet; und
Modifizieren der Rauschverteilung des datenmodulierten CDMA-Signals auf dem ersten und zweiten Kanal durch Ausblendung des datenmodulierten CDMA-Signals unter Steuerung der adaptiven Blankers.

8. Computerprogramm, das Anweisungen enthält, die, wenn das Programm von einem Computer ausgeführt wird, den Computer veranlassen, die Schritte des Verfahrens nach einem der vorhergehenden Ansprüche auszuführen.

9. Computerlesbares Speichermedium, auf dem das Computerprogramm nach Anspruch 8 gespeichert ist.

10. Vorrichtung zur Formung von Rauschverteilung eines datenmodulierten Code Division Multiple Access, CDMA, -Signals, die aufweist:
eine Trenneinheit, die ausgebildet ist, das datenmodulierte CDMA-Signal auf einen ersten und einen zweiten Kanal aufzuteilen, wobei der erste Kanal einen adaptiven Blanker umfasst;
eine Korrelationseinheit (235), die ausgebildet ist, das datenmodulierte CDMA-Signal auf dem zweiten Kanal mit einer Nachbildung zu korrelieren, die die gleiche Chipsequenz des CDMA-Signals aufweist und um eine vordefinierte Phase verschoben ist;
eine Extraktionseinheit (335), die ausgebildet ist, aus dem Korrelationsergebnis ein Vorzeichen eines in den Daten enthaltenen Symbols zu extrahieren; und
einen adaptiven Blanker, der ausgebildet ist, die Rauschverteilung des datenmodulierten CDMA-Signals auf dem ersten Kanal zu modifizieren durch Ausblenden des datenmodulierten CDMA-Signals, wobei der adaptive Blanker einen oberen und einen unteren Blanking-Schwellenwert aufweist und der obere und der untere Blanking-Schwellenwert auf der Grundlage des extrahierten Vorzeichens des Symbols angepasst werden.

## Revendications

1. Procédé de façonnage de distribution de bruit d'un signal d'accès multiple par répartition en code modulé de données, CDMA, consistant à :
séparer (S701) le signal de CDMA modulé de données sur un premier et un deuxième canal, le premier canal comprenant un suppresseur adaptatif ;
corréler (S702) le signal de CDMA modulé de données sur le deuxième canal avec une réplique ayant la même séquence de puce du signal de CDMA et étant déplacé par une phase prédéfinie ;
extraire (S703) du résultat de corrélation un signe d'un symbole inclus dans les données ; et
modifier (S704) la distribution de bruit du signal de CDMA modulé de données sur le premier canal par application d'une suppression du signal de CDMA modulé de données sous le contrôle du suppresseur adaptatif, le suppresseur adaptatif ayant des seuils de suppression supérieur et inférieur et les seuils de suppression supérieur et inférieur étant ajustés sur la base du signe extrait du symbole.

2. Procédé selon la revendication 1, dans lequel le seuil de suppression supérieur est décalé par une valeur positive et le seuil de suppression inférieur est décalé par une valeur négative, les valeurs positive et négative étant définies par une déviation standard proportionnée d'interférence circonférentielle et de bruit thermique.

3. Procédé selon les revendications 1 ou 2, dans lequel les seuils de suppression supérieur et inférieur sont décalés par une racine carrée d'une puissance estimée, Pₑₛₜ, du signal de CDMA multiplié par une polarité de valeur de puce du signal de CDMA ou de la réplique et d'un facteur d'échelle prédéfini, *α*.

4. Procédé selon la revendication 3, dans lequel *α* est positif, négatif, constant, dépendant du temps ou modifiant son signe dans le temps en fonction du signal de CDMA.

5. Procédé selon l'une quelconque des revendications précédentes, dans lequel la réplique est décalée à une réplique précoce, une réplique rapide et une réplique tardive.

6. Procédé selon l'une quelconque des revendications précédentes, dans lequel le signal de CDMA modulé de données sur le premier canal est en outre séparé sur deux canaux séparés, chacun des deux canaux séparés comprenant un suppresseur adaptatif, et un seuil du suppresseur adaptatif de l'un des deux canaux séparés étant réglé par un décalage dans une direction opposée à un seuil du suppresseur adaptatif de l'autre canal parmi les deux canaux séparés, le procédé comprenant en outre les étapes consistant à :
modifier la distribution de bruit du signal de CDMA modulé de données sur les deux canaux séparés par application de suppression du signal de CDMA modulé de données sous le contrôle des suppresseurs adaptatifs sur les deux canaux séparés ; et
corréler les signaux de CDMA modulés de données supprimées sur les deux canaux séparés avec une réplique rapide.

7. Procédé selon l'une quelconque des revendications précédentes, dans lequel le deuxième canal comprend en outre un suppresseur adaptatif, le procédé consistant en outre à:
régler les suppresseurs adaptatifs basés sur un troisième canal comprenant une seconde source, la seconde source transmettant le signal du symbole inclus dans les données ; et
modifier la distribution de bruit du signal de CDMA modulé de données sur le premier et le deuxième canal par application de suppression du signal de CDMA modulé de données sous le contrôle des suppresseurs adaptatifs.

8. Programme informatique comprenant des instructions qui, lorsque le programme est exécuté par un ordinateur, amènent l'ordinateur à réaliser les étapes du procédé selon l'une quelconque des revendications précédentes.

9. Support de stockage lisible sur ordinateur ayant stocké en son sein le programme informatique selon la revendication 8.

10. Dispositif de façonnage de distribution de bruit d'un signal d'accès multiple par répartition en code modulé de données, CDMA, comprenant :
une unité de séparation conçue pour séparer le signal de CDMA modulé de données sur un premier et un deuxième canal, le premier canal comprenant un suppresseur adaptatif ;
une unité de corrélation (235) conçue pour corréler le signal de CDMA modulé de données sur le deuxième canal avec une réplique ayant la même séquence de puce du signal de CDMA et étant déplacé par une phase prédéfinie ;
une unité d'extraction (335) conçue pour extraire du résultat de corrélation un signe d'un symbole inclus dans les données ; et
un suppresseur adaptatif conçu pour modifier la distribution de bruit du signal de CDMA modulé de données sur le premier canal par application d'une suppression du signal de CDMA modulé de données, le suppresseur adaptatif ayant des seuils de suppression supérieur et inférieur et les seuils de suppression supérieur et inférieur étant ajustés sur la base du signe extrait du symbole.
